# EUROPÄISCHE PATENTSCHRIFT

(11) **EP 3 689 676 B1**
(45) Veröffentlichungstag und Bekanntmachung des Hinweises auf die Patenterteilung: **30.11.2022**
(21) Anmeldenummer: 20151566.5
(22) Anmeldetag: 14.01.2020
(51) Int. Cl.: B60P 1/04, B60P 1/28, B60P 1/16

(54) **LAGERANORDNUNG FÜR EIN FAHRZEUG MIT EINEM KIPPAUFLIEGER**
BEARING ASSEMBLY FOR A VEHICLE WITH A TILTING TRAILER
DISPOSITIF PALIER POUR UN VÉHICULE DOTÉ D'UNE SEMI-REMORQUE À BENNES BASCULANTES

(30) Priorität: 04.02.2019 DE 102019201389
(43) Veröffentlichungstag der Anmeldung: 05.08.2020
(73) Patentinhaber: Franz Xaver Meiller Fahrzeug- und Maschinenfabrik - GmbH & Co KG, 80997 München (DE)
(72) Erfinder: POPP, Klaus, 82346 Andechs - Machtlfing (DE)
(74) Vertreter: Weickmann & Weickmann PartmbB

(56) Entgegenhaltungen:
- WO-A2-2018/055565
- DE-A1- 4 238 590
- US-A1- 2012 007 410

## Beschreibung

Die vorliegende Erfindung betrifft ganz allgemein Verbesserungen auf dem Gebiet von Lageranordnungen für Fahrzeuge mit einem Kippauflieger, die gattungsgemäß ein erstes Lagerteil, welches einem Rahmen des Fahrzeugs zuordenbar ist, und ein zweites Lagerteil umfassen, welches dem Kippauflieger zuordenbar ist, wobei das erste und das zweite Lagerteil dazu vorgesehen sind, in einem miteinander verbundenen Zustand eine Schwenkbewegung des Kippaufliegers gegenüber dem Rahmen des Fahrzeugs um wenigstens eine innere Schwenkachse zu ermöglichen, wobei die Lageranordnung ferner einen lösbaren Verriegelungsstift umfasst, welcher in einer Verriegelungsposition derart mit dem ersten und dem zweiten Lagerteil zusammenwirkt, dass der verbundene Zustand des ersten und zweiten Lagerteils festgelegt ist.

Fahrzeuge mit einem Kippauflieger, der in zwei oder drei Richtungen kippbar ist, also so genannte Zweiseitenkipper bzw. Dreiseitenkipper, benötigen im vorderen Bereich des Kippaufliegers für dessen kippbare Lagerung ein oder zwei in Breitenrichtung des Fahrzeugs außen angeordnete Gabelkipplager, die ein Kippen um eine innere Achse zu einer Seite des Fahrzeugs ermöglichen, sowie in ihrem hinteren Bereich zwei Kugelkipplager, die ein Kippen um zwei senkrecht zueinander orientierte Achsen ermöglichen, nämlich jeweils zu einer Seite und nach hinten. Diese Gabelkipplager und Kugelkipplager sind in der vorliegenden Anmeldung unter dem Begriff "Lageranordnungen" zusammengefasst, und es versteht sich, dass zum Ermöglichen eines Kippens um eine außerhalb der entsprechenden Lageranordnung liegende externe Achse die beiden Lagerteile der jeweiligen Lageranordnung voneinander trennbar sein müssen. Ein Beispiel hierfür ist ein Kippen des Kippaufliegers nach hinten, zu welchem Zweck die Lagerteile des einen oder der beiden Gabelkipplager im vorderen Bereich des Kippaufliegers getrennt werden müssen.

Um die Betriebssicherheit derartiger Fahrzeuge in jedem Zustand sicherstellen zu können, müssen Vorrichtungen zum festen Verriegeln sämtlicher Kipplager in ihrem jeweiligen verbundenen Zustand vorgesehen sein, was bisher im Stand der Technik durch axiale Steckbolzensicherungen oder Verriegelungsstifte verwirklicht ist. Diese axialen Steckbolzensicherungen sind in ihren Verriegelungspositionen jeweils derart positioniert, dass die Lagerteile der Gabelkipplager bzw. Kugelkipplager nicht versehentlich voneinander trennbar sind, wobei die Steckbolzensicherungen in der Regel zusätzlich durch einen Federstecker an einer Kette gesichert werden, der ein unerwünschtes Lösen des Steckbolzens aus seiner Verriegelungsposition verhindert, so dass eine doppelte Sicherung vorliegt.

Insbesondere soll in diesem Zusammenhang auf die Druckschrift US 2012/007410 A1 hingewiesen sein, welche eine gattungsgemäße Lageranordnung lehrt.

Der Vollständigkeit halber soll ferner auf die DE 4238590 A1 und die WO 2018/055565 A2 verwiesen sein.

Derartige durch einen Federstecker gesicherte Steckbolzen sind jedoch für einen Bediener wenig komfortabel, da sie meistens eine zweihändige Bedienung erfordern, indem der Bediener zunächst einmal mit einer Hand den Federstecker aus dem Steckbolzen entfernt und anschließend mit der anderen Hand den Steckbolzen selbst aus der Lageranordnung entfernen kann. Somit besteht an dieser Stelle noch Verbesserungsbedarf und es ist die Aufgabe der vorliegenden Erfindung, die genannten Nachteile des bekannten Stands der Technik zu beheben und eine besonders benutzerfreundliche gattungsgemäße Lageranordnung bereitzustellen.

Zu diesem Zweck umfasst der Verriegelungsstift der erfindungsgemäßen Lageranordnung gemäß einem ersten Aspekt ein Betätigungselement, welches in einem von einem Benutzer betätigten Zustand ein Lösen des Verriegelungsstifts aus der Verriegelungsposition und damit ein Freigeben des verbundenen Zustands der Lageranordnung ermöglicht, wobei dem ersten oder dem zweiten Lagerteil ferner ein Sperrelement zugeordnet ist, wobei der Verriegelungsstift in der Verriegelungsposition unter Beibehaltung der Verriegelung in eine Sperrausrichtung überführbar bzw. aus der Sperrausrichtung heraus überführbar ist, in welcher das Sperrelement und das Betätigungselement derart zusammenwirken, dass eine Betätigung des Betätigungselements verhindert ist.

Indem auf diese Weise durch das Vorsehen des Betätigungselements an dem Verriegelungsstift selbst und das Zusammenwirken dieses Betätigungselements mit dem an einem der Lagerteile vorgesehenen Sperrelement in einer Sperrausrichtung eine doppelte Sicherung der Verriegelung erzielt wird, die lediglich über den Verriegelungsstift selbst hergestellt wird, ohne dass hierzu weitere Komponenten wie der oben beschriebene Federstecker notwendig sind, kann eine einhändige Bedienung der Lageranordnung realisiert werden, ohne dass hierbei Einbußen bei Sicherheit oder Zuverlässigkeit der Verriegelung hingenommen werden müssten.

In der erfindungsgemäßen Lageranordnung umfasst das Betätigungselement des Verriegelungsstifts einen um eine Achse schwenkbaren Griffabschnitt, welcher in den betätigten Zustand, vorzugsweise gegen die Wirkung eines Rückstellelements, beispielsweise einer Feder, zu schwenken ist. Durch diese bauliche Maßnahme wird eine ergonomisch besonders vorteilhafte Ausführung des Betätigungselements erzielt, da es dem Benutzer erlaubt wird, den Verriegelungsstift sicher zu greifen und hierbei eine ausreichend große Kraft auf das Betätigungselement auszuüben.

Zur Realisierung der Sperrausrichtung zwischen dem Verriegelungsstift und dem entsprechenden der Lagerteile kann in der eben beschriebenen Ausführungsform der Griffabschnitt schwenkfest mit einem Klinkenabschnitt bereitgestellt sein, wobei in dieser Weiterbildung der Erfindung das Sperrelement insbesondere durch einen Anlageabschnitt an dem ersten oder dem zweiten Lagerteil gebildet sein kann, welcher dazu eingerichtet sein kann, in einer vorbestimmten Winkelposition des Verriegelungsstifts in der Verriegelungsposition derart mit dem Klinkenabschnitt des Verriegelungsstift zusammenzuwirken, dass das Schwenken des Griffabschnitts verhindert ist.

Somit stellt sich die Bedienung des Verriegelungsstifts für den Benutzer während eines Verriegelungsvorgangs derart dar, dass der Verriegelungsstift zunächst einmal unter Betätigung des Betätigungselements in seine Verriegelungsposition gegenüber dem ersten und dem zweiten Lagerteil eingeführt wird, daraufhin das Betätigungselement des Verriegelungsstifts freigegeben wird und anschließend der Verriegelungsstift unter Beibehaltung der Verriegelungsposition derart gedreht wird, dass sein Klinkenabschnitt mit dem Anlageabschnitt an einem der Lagerteile in Kontakt kommt und die Sperrausrichtung erreicht wird, in der zunächst einmal ein erneutes Betätigen des Betätigungselements nicht mehr möglich ist. Um den Verriegelungszustand anschließend wieder lösen zu können, muss der Benutzer zunächst einmal den Verriegelungsstift erneut aus der Sperrausrichtung herausschwenken, bis ein erneutes Betätigen des Betätigungselements möglich ist, woraufhin dann der Verriegelungsstift wieder von dem ersten und dem zweiten Lagerteil gelöst werden kann und die Lageranordnung freigegeben werden kann. Es zeigt sich, dass das Betätigen des Betätigungselements und das Drehen des Verriegelungsstifts hervorragend mit einer einzelnen Hand durchführbar sind, sodass diese Ausführungsform die erfindungsgemäße Aufgabe in besonders benutzerfreundlicher Weise löst. Selbstverständlich sind jedoch auch andere Varianten zur Ausbildung der entsprechenden Komponenten denkbar, beispielsweise eine translatorische Überführung des Verriegelungsstifts in die Sperrausrichtung anstelle der eben beschriebenen rotatorischen Überführung.

Wie bereits weiter oben angesprochen, kann eine erfindungsgemäße Lageranordnung eine einzelne innere Schwenkachse aufweisen, welche vorzugsweise im Wesentlichen senkrecht zu dem Verriegelungsstift in dessen Verriegelungsposition orientiert ist. Bei einer solchen Lageranordnung handelt es sich folglich um ein Gabelkipplager wie oben diskutiert, wohingegen die erfindungsgemäße Lageranordnung ebenfalls ein Kugelkipplager wie oben diskutiert bilden kann, in welchem zwei innere Schwenkachsen vorgesehen sind, und hierbei das erste Lagerteil einen Kugelabschnitt und das zweite Lagerteil eine Kugelpfanne umfasst, wobei vorzugsweise eine der inneren Schwenkachsen im Wesentlichen senkrecht zu dem Verriegelungsstift in dessen Verriegelungsposition orientiert ist und/oder die andere der inneren Schwenkachsen im Wesentlichen parallel zu dem Verriegelungsstift in dessen Verriegelungsposition orientiert ist. Es zeigt sich hierbei, dass die beschriebenen Verriegelungsstifte universell in Lageranordnungen von beiden der genannten Typen von Lageranordnungen eingesetzt werden können, so dass an dieser Stelle durch die vorliegende Erfindung gegenüber dem Stand der Technik keine erhöhte Komplexität erzeugt wird.

In dem zuletzt beschriebenem Fall eines Kugelkipplagers kann der Kugelabschnitt eine Durchbrechung mit einer Längsausdehnung entlang seiner Oberfläche umfassen, so dass der Verriegelungsstift in seiner Verriegelungsposition unter Beibehaltung der Schwenkbarkeit um die beiden inneren Schwenkachsen durch die Durchbrechung des Kugelabschnitts aufgenommen sein kann. In derart ausgebildeten Kugelkipplagern kann durch das Führen des Verriegelungsstifts durch das Innere des Kugelabschnitts selbst eine Bauraumoptimierung und eine Gewichtsreduzierung erzielt werden, da im Gegensatz zu anderen bekannten Ausführungsformen aus dem Stand der Technik der Verriegelungsstift nicht mehr tangential an der Umfangsunterseite des Kugelabschnitts angeordnet und gehaltert werden muss, sondern der ohnehin durch die Kugel eingenommene Bauraum zusätzlich zur Positionierung des Verriegelungsstifts verwendet werden kann.

In diesem Zusammenhang betrifft die vorliegende Erfindung gemäß einem zweiten Aspekt ferner eine Maßnahme zur Reduktion von Geräuschen und zur verringerten Abnutzung der Lagerteile in derart gebildeten Kugelkipplagern, welche zwar uneingeschränkt in Kugelkipplagern gemäß dem ersten Aspekt der Erfindung einsetzbar ist, für welche jedoch auch unabhängig Schutz begehrt wird, da sich ihre Vorteile auch dann ergeben, wenn auf einen herkömmlichen Verriegelungsstift aus dem bekannten Stand der Technik zurückgegriffen wird.

Eine derartige Lageranordnung für ein Fahrzeug mit einem Kippauflieger gemäß dem zweiten Aspekt der Erfindung umfasst ein erstes Lagerteil, welches einem Rahmen des Fahrzeugs zuordenbar ist und einen Kugelabschnitt aufweist, ein zweites Lagerteil, welches dem Kippauflieger zuordenbar ist und eine Kugelpfanne aufweist, wobei das erste und das zweite Lagerteil dazu vorgesehen sind, in einem miteinander verbundenen Zustand eine Schwenkbewegung des Kippaufliegers gegenüber dem Rahmen des Fahrzeugs um zwei innere Schwenkachsen zu ermöglichen, wobei die Lageranordnung ferner einen lösbaren Verriegelungsstift umfasst, welcher in einer Verriegelungsposition derart mit dem ersten und dem zweiten Lagerteil zusammenwirkt, dass der verbundene Zustand des ersten und zweiten Lagerteils festgelegt ist, wobei der Kugelabschnitt des ersten Lagerteils eine Durchbrechung mit einer Längsausdehnung entlang seiner Oberfläche umfasst, sodass der Verriegelungsstift in seiner Verriegelungsposition unter Beibehaltung der Schwenkbarkeit um die beiden inneren Schwenkachsen durch die Durchbrechung aufgenommen ist, wobei der Kugelpfanne des zweiten Lagerteils ein Dämpfungselement derart zugeordnet ist, dass es bei einer jeweiligen Schwenkbewegung um beide der inneren Achsen stets in Kontakt mit dem Kugelabschnitt des ersten Lagerteils verbleibt.

Indem auf diese Weise ein Dämpfungselement zwischen dem Kugelabschnitt des ersten Lagerteils und der Kugelpfanne des zweiten Lagerteils vorgesehen wird, kann ein direkter Kontakt zwischen den beiden genannten Komponenten ausgeschlossen werden, wodurch im Kippbetrieb der Lageranordnung sowohl Geräusche als auch Verschleiß der Lagerteile verringert werden.

In einer bevorzugten Ausführungsform kann das Dämpfungselement kugelförmig und/oder aus einem Kunststoff mit einer geeigneten Härte ausgebildet sein. Jedoch kann das Material des Dämpfungselements ganz allgemein insbesondere unter den Gesichtspunkten einer gewünschten Widerstandsfähigkeit und gewünschter Dämpfungseigenschaften ausgewählt werden.

Im Falle eines kugelförmigen Dämpfungselements kann es weiterhin vorteilhaft sein, an dem Kugelabschnitt des ersten Lagerteils eine im Wesentlichen kreisförmige Ausnehmung mit nach innen zunehmender Tiefe vorzusehen, um das kugelförmige Dämpfungselement in komplementärer Weise aufzunehmen. Somit wird eine vergrößerte Kontaktfläche zwischen dem kugelförmigen Dämpfungselement und dem Kugelabschnitt des ersten Lagerteils geschaffen, was wiederum einen vorteilhaften Einfluss auf die Beständigkeit des Dämpfungselements und die Unterdrückung von Geräuschen hat.

Um einen dauerhaften und sicheren Kontakt zwischen dem Dämpfungselement und dem Kugelabschnitt des ersten Lagerteils sicherzustellen, kann das Dämpfungselement durch ein elastisches Element, beispielsweise eine Feder, in Richtung des Kugelelements vorbelastet an der Kugelpfanne abgestützt sein und ferner vorzugsweise fest mit dem elastischen Element verbunden sein. Durch eine derartige feste Verbindung zwischen dem elastischen Element und dem Dämpfungselement kann sichergestellt werden, dass das Dämpfungselement nicht aus seiner vorgesehenen Position herausbewegt oder verloren werden kann.

Zuletzt betrifft die vorliegende Erfindung ein Fahrzeug mit einem Kippauflieger, umfassend wenigstens ein erfindungsgemäßes Lagerelement, wobei das erfindungsgemäße Fahrzeug insbesondere ein Paar von Lagerandordnungen in der Bauform eines Gabelkipplagers in einem vorderen Bereich des Fahrzeugs sowie ein Paar von Lageranordnungen in der Bauform eines Kugelkipplagers in einem hinteren Bereich des Fahrzeugs umfassen kann, wobei die beiden Paare von Lageranordnungen sich bezüglich der Längsachse des Fahrzeugs jeweils symmetrisch gegenüber liegen und insbesondere den Kippauflieger derart tragen, dass dieser nach drei Seiten kippbar ist.

Weitere Merkmale und Vorteile der vorliegenden Erfindung werden aus der nachfolgenden Beschreibung von Ausführungsformen von erfindungsgemäßen Lageranordnungen deutlich, wenn diese zusammen mit den beiliegenden Figuren betrachtet werden. Diese zeigen im Einzelnen:
- Figur 1:: eine erste Ausführungsform einer erfindungsgemäßen Lageranordnung in Form eines Gabelkipplagers;
- Figur 2:: eine zweite Ausführungsform einer erfindungsgemäßen Lageranordnung in Form eines Kugelkipplagers;
- Figur 3:: eine Detailansicht des Verriegelungsstifts der Lageranordnungen aus den Figuren 1 und 2; und
- Figur 4:: eine Querschnittsansicht der Ausführungsform aus Figur 2.

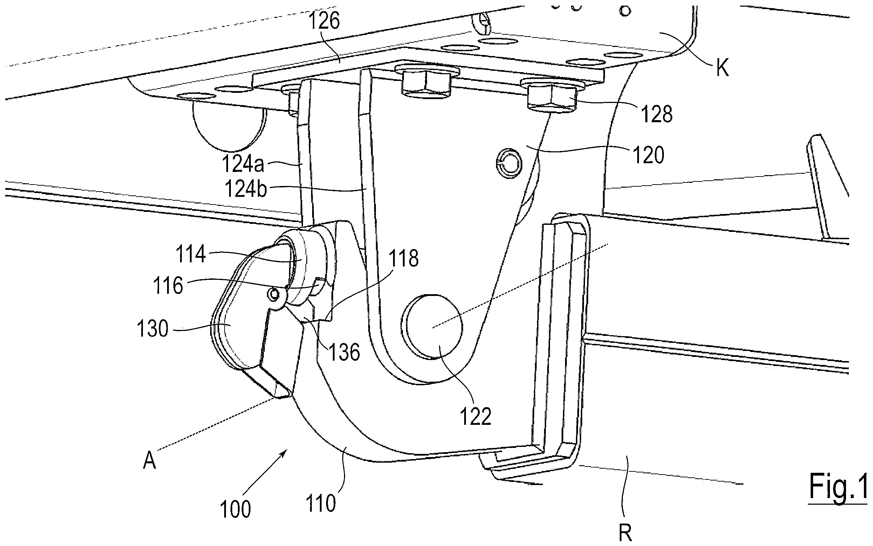

In Figur 1 ist zunächst einmal eine erste Ausführungsform einer erfindungsgemäßen Lageranordnung gezeigt, die ganz allgemein mit dem Bezugszeichen 100 bezeichnet ist und ein erstes Lagerteil 110 sowie ein zweites Lagerteil 120 umfasst. Es handelt sich bei der Lageranordnung 100 um ein Gabelkipplager mit einer einzelnen inneren Schwenkachse, die in Figur 1 mit A bezeichnet ist und die durch einen Lagerbolzen 122 verläuft.

Dieser Lagerbolzen 122 ist dem zweiten Lagerteil 120 zugeordnet und erstreckt sich zwischen zwei Wandelementen 124a und 124b, die sich wiederum von einer Trägerplatte 126 erstrecken, die mittels Schraubverbindungen 128 an einem Kippauflieger K eines ansonsten nicht weiter dargestellten Fahrzeug befestigt sind. Der Lagerbolzen 122 liegt in dem gezeigten verbundenen Zustand der Lageranordnung 100 in einem ersten Lagerteil 110 ein, das in ähnlicher Weise mit einem Rahmen R des genannten Fahrzeugs verbunden ist.

Das erste Lagerteil 110 bildet hierzu eine Lagertasche, in der wie angesprochen der Lagerbolzen 122 einliegt, und die an ihrer Oberseite durch einen Verriegelungsstift 130 geschlossen ist, so dass in der in Figur 1 gezeigten Konfiguration die beiden Lagerteile 110 und 120 durch das Zusammenwirken von erstem Lagerteil 110, Lagerbolzen 122 und Verriegelungsstift 130 untrennbar verbunden sind. Der Verriegelungsstift 130 ist hierbei durch einen Flansch 114 mit einer zentralen Bohrung an dem ersten Lagerteil 110 eingeführt.

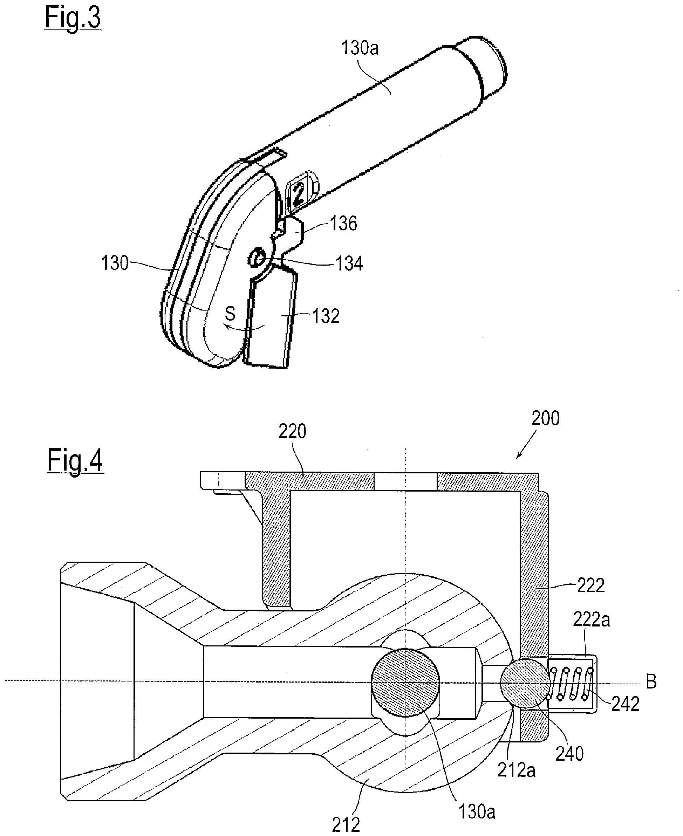

Unter Bezugnahme auf Figur 3 umfasst der Verriegelungsstift 130 neben seinem zylindrischen Stiftabschnitt 130a einen Griffabschnitt 132, der von einem Benutzer gegriffen werden kann und gegen die Wirkung eines nicht dargestellten elastischen Elements, wie beispielsweise einer Feder, um eine Schwenkachse 134 in Richtung des Pfeils S schwenkbar ist. Drehfest mit dem Griffabschnitt verbunden weist der Verriegelungsstift 130 ferner einen Klinkenabschnitt 136 auf, der sich bei einer Betätigung des Griffelements 132 dementsprechend ebenfalls um die Schwenkachse 134 dreht. Somit bilden der Griffabschnitt 132 und der Klinkenabschnitt 136 gemeinsam das Betätigungselement im Sinne der vorliegenden Erfindung.

Zurück unter Bezugnahme auf Figur 1 ist zu erkennen, dass das Klinkenelement 136 des Verriegelungsstifts 130 einerseits in einer Hinterschneidung 116 des Flanschabschnitts 114 einliegt und somit ein Herausziehen des Verriegelungsstifts 130 aus dem Flanschabschnitt 114 heraus verhindert und andererseits mit einem als Sperrelement dienenden Anlageabschnitt 118 in Anlage steht, der als Teil des ersten Lagerteils 110 ausgebildet ist. Hierbei sorgt die bereits angesprochene, nicht gezeigte Feder dafür, dass das Klinkenelement 136 in Richtung des Anlageabschnitts 118 vorgespannt ist und somit in fester Anlage verbleibt.

Durch das Zusammenwirken des Klinkenelements 136 mit sowohl dem Flanschabschnitt 114 als auch dem Anlageabschnitt 118 ist einerseits der Verriegelungsstift 130 wie angesprochen in der gezeigten Verriegelungsposition fixiert, sodass der verbundene Zustand des ersten und zweiten Lagerteils festgesetzt ist, und andererseits auch das Betätigen des Griffelements 132 in der gezeigten Ausrichtung unmöglich, da der Klinkenabschnitt 136 an dem Anlageabschnitt 118 ruht und somit auch ein Schwenken des Griffelements um die Schwenkachse 134 in Richtung des Pfeils S aus Figur 3 unmöglich ist.

Um den Verriegelungsstift 130 demzufolge aus dem Flanschabschnitt 114 entnehmen zu können, um den freigegebenen Zustand der beiden Lagerteile 110 und 120 herzustellen und demzufolge ein Schwenken des Kippaufliegers K um eine der Lageranordnung 110 externe Kippachse zu ermöglichen, muss ein Benutzer den Verriegelungsstift 130 zunächst einmal gegenüber dem ersten Lagerteil 110 soweit drehen, bis das Klinkenelement 136 aus dem Bereich des Eingriffs mit dem Anlageabschnitt 118 kommt, woraufhin dann das Griffelement 132 zum Lösen des Klinkenelements 136 von dem Flanschabschnitt 114 betätigt werden kann. Somit ist in der gezeigten Lageranordnung 100 eine doppelte Sicherung des Verriegelungsstifts 130 vorgesehen, die jedoch von einem Benutzer komfortabel mit einer Hand gelöst werden kann.

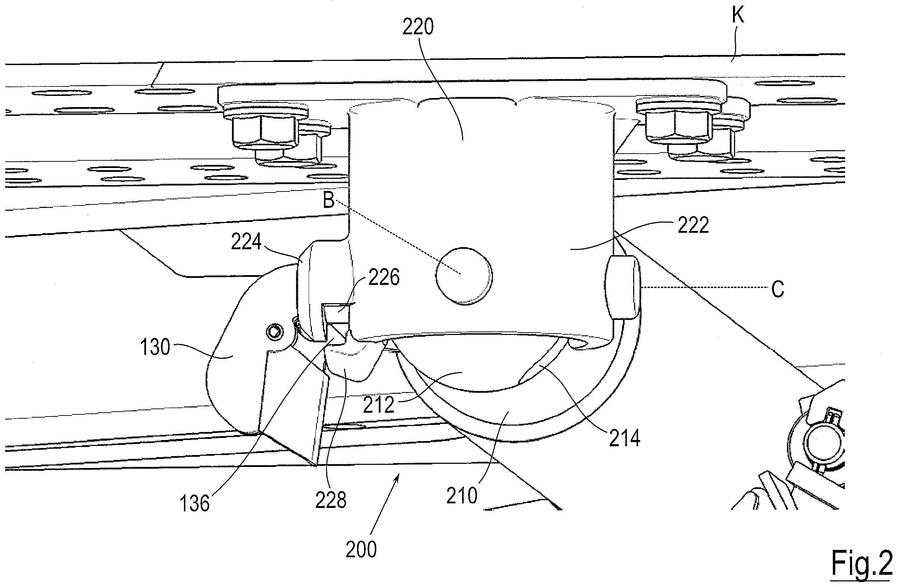

In ähnlicher Weise ist in Figur 2 eine zweite Ausführungsform einer erfindungsgemäßen Lageranordnung gezeigt und mit dem Bezugszeichen 200 bezeichnet, die eine Bauform eines Kugelkipplagers darstellt und die ebenfalls ein erstes Lagerteil 210 und ein zweites Lagerteil 220 umfasst. Die Lageranordnung 200 umfasst ferner einen baugleichen Verriegelungsstift 130 wie die in Figur 1 erste gezeigte Ausführungsform einer Lageranordnung 100, wobei dieser Verriegelungsstift 130 wie angesprochen in Figur 3 alleine dargestellt ist.

Im Gegensatz zu der in Figur 1 gezeigten Lageranordnung 100, welche ein Kippen des Kippaufliegers K gegenüber dem nicht weiter dargestellten Fahrzeug um lediglich eine einzelne Achse A erlaubt, weist die Lageranordnung 200 aus Figur 2 zwei Kippachsen auf, die in Figur 2 mit B und C bezeichnet sind und die senkrecht aufeinander stehen. Hierbei wird die Schwenkbarkeit um die beiden Achsen B und C dadurch erreicht, dass die Lageranordnung 200 einen dem ersten Lagerteil 210 zugeordneten Kugelabschnitt 212 aufweist, der in einer dem zweiten Lagerteil 220 zugehörigen Kugelpfanne 222 einliegt.

Wie in Figur 2 zu erkennen ist, ist der mit einer zentralen Durchbrechung vorgesehene Flanschabschnitt 224 dieses Mal dem zweiten Lagerteil 220 und nicht wie in Figur 1 dem ersten Lagerteil 110 zugeordnet, er ist jedoch im Wesentlichen identisch zu dem Flansch 114 aus Figur 1 aufgebaut und umfasst ebenfalls eine Hinterschneidung 226. Ferner ist in Figur 2 zu sehen, dass auch ein entsprechender Anlageabschnitt 228 als Verlängerung des zweiten Lagerteils 220 vorgesehen ist, wodurch die Funktionsweise und das Zusammenwirken des Flanschabschnitts 224, des Anlageabschnitts 228 und des Klinkenabschnitts 136 des Verriegelungsstifts 130 identisch zu denjenigen der Lageranordnung aus Figur 1 sind, so dass auf eine erneute Erläuterung hiervon an dieser Stelle verzichtet werden soll.

Im Gegensatz zu aus dem Stand der Technik bekannten Verriegelungsstiften, die in der Regel tangential unterhalb des Kugelabschnitts 212 des ersten Lagerteils verlaufen, erstreckt sich der Verriegelungsstift 130 durch den Kugelabschnitt 112 des ersten Lagerteils 110 hindurch und dient somit selbst als die Schwenkachse C, wozu in dem Kugelabschnitt 212 eine Durchbrechung 214 mit einer Längsausdehnung entlang der Oberfläche des Kugelelements 212 vorgesehen ist, wie in Figur 2 gut zu erkennen ist. Auf diese Weise wird auch eine Schwenkbarkeit um die Schwenkachse B ermöglicht, da bei einem derartigen Schwenken der Verriegelungsstift 130 ortsfest verbleiben kann und die Ausnehmung 214 im Wesentlichen wie ein sphärisches Langloch wirkt.

Zuletzt sei unter Bezugnahme auf die Figur 4 verdeutlicht, welche Maßnahmen zur Geräuschdämpfung in der Lageranordnung 200 aus Figur 2 getroffen sind, wobei die Lageranordnung 200 zu diesem Zweck in einer Querschnittsansicht bzgl. der Ebene dargestellt ist, die parallel zu der Schwenkachse B und senkrecht zu der Schwenkachse C durch die jeweiligen Mitten des Kugelabschnitts 212 des ersten Lagerteils 210 sowie der Kugelpfanne 222 des zweiten Lagerteils 220 verläuft.

Hierbei ist der Kugelpfanne 222 eine mit einem fest angebrachten Gehäuseabschnitt 222a abgedeckte Ausnehmung zugeordnet, in der ein Dämpfungselement 240 in Form einer Kugel aus einem harten Kunststoff einliegt, das von einer Feder 242 fest getragen und gegen das Gehäuse 222a abgestützt ist. Das Dämpfungselement 240 liegt andererseits in einer kreisförmigen Ausnehmung 212a in dem Außenumfang des Kugelelements 212 ein, die komplementär zu der Form und dem Umfang der Kugel 240 gebildet ist.

Durch das Vorsehen der Feder 242 ist ein dauerhafter Kontakt zwischen der Kugel 240 und der Ausnehmung 212a sichergestellt. Sowohl bei einer Rotation um die Kippachse B als auch um die Kippachse C verbleibt das Dämpfungselement 240 stets in der Ausnehmung 212a und kann zur Dämpfung von Vibrationen und zur Verhinderung von Geräuschen dienen, da ein direkter Kontakt zwischen dem Kugelabschnitt 212 und der Kugelpfanne 222 vermieden wird.

## Patentansprüche

1. Lageranordnung für ein Fahrzeug mit einem Kippauflieger, umfassend:
- ein erstes Lagerteil (110, 210), welches einem Rahmen (R) des Fahrzeugs zuordenbar ist;
- ein zweites Lagerteil (120, 220), welches dem Kippauflieger (K) zuordenbar ist;
wobei das erste (110, 210) und das zweite (120, 220) Lagerteil dazu vorgesehen sind, in einem miteinander verbundenen Zustand eine Schwenkbewegung des Kippaufliegers (K) gegenüber dem Rahmen (R) des Fahrzeugs um wenigstens eine innere Schwenkachse (A, B, C) zu ermöglichen;
- einen lösbaren Verriegelungsstift (130), welcher in einer Verriegelungsposition derart mit dem ersten (110, 210) und dem zweiten (120, 220) Lagerteil zusammenwirkt, dass der verbundene Zustand des ersten (110, 210) und zweiten (120, 220) Lagerteils festgelegt ist, wobei
der Verriegelungsstift (130) ein Betätigungselement (132, 136) umfasst, welches in von einem Benutzer betätigten Zustand ein Lösen des Verriegelungsstifts (130) aus der Verriegelungsposition und damit ein Freigeben des verbundenen Zustands ermöglicht, wobei dem ersten (110, 210) oder dem zweiten (120, 220) Lagerteil ferner ein Sperrelement (118, 228) zugeordnet ist, wobei der Verriegelungsstift (130) in der Verriegelungsposition unter Beibehaltung der Verriegelung in eine Sperrausrichtung überführbar bzw. aus der Sperrausrichtung heraus überführbar ist, in welcher das Sperrelement (118, 228) und das Betätigungselement (132, 136) derart zusammenwirken, dass eine Betätigung des Betätigungselements (132, 136) verhindert ist,
**dadurch gekennzeichnet, dass**
das Betätigungselement (132, 136) des Verriegelungsstifts (130) einen um eine Achse (134) schwenkbaren Griffabschnitt (132) umfasst, welcher in den betätigten Zustand, vorzugsweise gegen die Wirkung eines Rückstellelements, beispielsweise einer Feder, zu schwenken ist.

2. Lageranordnung nach Anspruch 1, wobei der Griffabschnitt (132) schwenkfest mit einem Klinkenabschnitt (136) bereitgestellt ist.

3. Lageranordnung nach Anspruch 2, wobei das Sperrelement (118, 218) durch einen Anlageabschnitt (118, 228) an dem ersten (110) oder dem zweiten (220) Lagerteil gebildet ist, welcher dazu eingerichtet ist, in einer vorbestimmten Winkelposition des Verriegelungsstifts (130) in der Verriegelungsposition derart mit dem Klinkenabschnitt (136) des Verriegelungsstifts (130) zusammenzuwirken, dass das Schwenken des Griffabschnitts (132) verhindert ist.

4. Lageranordnung nach einem der vorhergehenden Ansprüche, wobei eine einzelne innere Schwenkachse (A) vorgesehen ist, welche vorzugsweise im Wesentlichen senkrecht zu dem Verriegelungsstift (130) in dessen Verriegelungsposition orientiert ist.

5. Lageranordnung nach einem der vorhergehenden Ansprüche, wobei zwei innere Schwenkachsen (B, C) vorgesehen sind, indem das erste Lagerteil (210) einen Kugelabschnitt (212) und das zweite Lagerteil (220) eine Kugelpfanne (222) umfasst, wobei vorzugsweise eine der inneren Schwenkachsen (B) im Wesentlichen senkrecht zu dem Verriegelungsstift (130) in dessen Verriegelungsposition orientiert ist und/oder die andere der inneren Schwenkachsen (C) im Wesentlichen parallel zu dem Verriegelungsstift (130) in dessen Verriegelungsposition orientiert ist.

6. Lageranordnung nach Anspruch 5, wobei der Kugelabschnitt (212) eine Durchbrechung (214) mit einer Längsausdehnung entlang seiner Oberfläche umfasst, so dass der Verriegelungsstift (130) in seiner Verriegelungsposition unter Beibehaltung der Schwenkbarkeit um die beiden inneren Schwenkachsen (B, C) durch die Durchbrechung (214) aufgenommen ist.

7. Lageranordnung nach Anspruch 5,
wobei der Kugelabschnitt (212) des ersten Lagerteils (210) eine Durchbrechung (214) mit einer Längsausdehnung entlang seiner Oberfläche umfasst, so dass der Verriegelungsstift (130) in seiner Verriegelungsposition unter Beibehaltung der Schwenkbarkeit um die beiden inneren Schwenkachsen (B, C) durch die Durchbrechung (214) aufgenommen ist, und
der Kugelpfanne (222) des zweiten Lagerteils (220) ein Dämpfungselement (240) derart zugeordnet ist, dass es bei einer jeweiligen Schwenkbewegung um beide der inneren Achsen (B, C) stets in Kontakt mit dem Kugelabschnitt (212) des ersten Lagerteils (210) verbleibt.

8. Lageranordnung nach Anspruch 7, wobei das Dämpfungselement (240) kugelförmig und/oder aus einem Kunststoff mit einer geeigneten Härte ausgebildet ist.

9. Lageranordnung nach Anspruch 8, wobei an dem Kugelabschnitt (212) eine im Wesentlichen kreisförmige Ausnehmung (212a) mit nach innen zunehmender Tiefe vorgesehen ist, um das kugelförmige Dämpfungselement (240) in komplementärer Weise aufzunehmen.

10. Lageranordnung nach einem der Ansprüche 7 bis 9, wobei das Dämpfungselement (240) durch ein elastisches Element (242), beispielsweise eine Feder (242), in Richtung des Kugelelements (212) vorbelastet an der Kugelpfanne (222) abgestützt ist und ferner vorzugsweise fest mit dem elastischen Element (242) verbunden ist.

11. Fahrzeug mit einem Kippauflieger, umfassend wenigstens eine Lageranordnung nach einem der vorhergehenden Ansprüche.

12. Fahrzeug nach Anspruch 11, umfassend ein Paar von Lageranordnungen nach Anspruch 4 in einem vorderen Bereich des Fahrzeugs sowie ein Paar von Lageranordnungen nach einem der Ansprüche 5 bis 10 in einem hinteren Bereich des Fahrzeugs, wobei die beiden Paare von Lageranordnungen sich bezüglich der Längsachse des Fahrzeugs jeweils symmetrisch gegenüberliegen und insgesamt den Kippauflieger derart tragen, dass dieser nach drei Seiten kippbar ist.

## Claims

1. Bearing arrangement for a vehicle with a tipping semitrailer, comprising:
- a first bearing part (110, 210), which can be assigned to a frame (R) of the vehicle;
- a second bearing part (120, 220), which can be assigned to the tipping semitrailer (K);
the first (110, 210) and the second (120, 220) bearing part being provided in order to enable, in an interconnected state, a pivoting movement of the tipping semitrailer (K) relative to the frame (R) of the vehicle about at least one inner pivot axis (A, B, C);
- a releasable locking pin (130), which, in a lock position, cooperates with the first (110, 210) and the second (120, 220) bearing part such that the connected state of the first (110, 210) and second (120, 220) bearing part is set,
the locking pin (130) comprising an actuating element (132, 136) which, when actuated by a user, enables the locking pin (130) to be released from the lock position and thus enables the connected state to be released, a blocking element (118, 228) also being assigned to the first (110, 210) or the second (120, 220) bearing part, the locking pin (130) being able to be transferred into a blocking orientation or out of the blocking orientation in the lock position while maintaining the locking, in which blocking orientation the blocking element (118, 228) and the actuating element (132, 136) interact in such a way that actuation of the actuating element (132, 136) is prevented,
**characterised in that**
the actuating element (132, 136) of the locking pin (130) comprises a handle portion (132) which can be pivoted about a pin (134) and which can be pivoted into the actuated state, preferably counter to the action of a restoring element, for example a spring.

2. Bearing arrangement according to claim 1, wherein the handle portion (132) is pivotally fixed to a pawl portion (136).

3. Bearing arrangement according to claim 2, wherein the blocking element (118, 218) is formed by an abutment portion (118, 228) on the first (110) or the second (220) bearing part, which abutment portion is designed, in a predetermined angular position of the locking pin (130) in the lock position, to cooperate with the pawl portion (136) of the locking pin (130) in such a way that pivoting of the handle portion (132) is prevented.

4. Bearing arrangement according to any of the preceding claims, wherein a single inner pivot axis (A) is provided, which is preferably oriented substantially perpendicularly to the locking pin (130) in its lock position.

5. Bearing arrangement according to any of the preceding claims, wherein two inner pivot axes (B, C) are provided, by the first bearing part (210) comprising a ball portion (212) and the second bearing part (220) comprising a ball socket (222), wherein preferably one of the inner pivot axes (B) is oriented substantially perpendicularly to the locking pin (130) in its lock position and/or the other of the inner pivot axes (C) is oriented substantially parallel to the locking pin (130) in its lock position.

6. Bearing arrangement according to claim 5, wherein the ball portion (212) comprises an opening (214) with a longitudinal extent along its surface, so that the locking pin (130) is received in its lock position through the through-hole (214) while maintaining the pivotability about the two inner pivot axes (B, C).

7. Bearing arrangement according to claim 5, wherein the ball portion (212) of the first bearing part (210) comprises an opening (214) with a longitudinal extent along its surface, so that the locking pin (130) is received in its lock position through the through-hole (214) while maintaining the pivotability about the two inner pivot axes (B, C) and
a damping element (240) is assigned to the ball socket (222) of the second bearing part (220) in such a way that it always remains in contact with the ball portion (212) of the first bearing part (210) during a pivoting movement about both of the inner axes (B, C).

8. Bearing arrangement according to claim 7, wherein the damping element (240) is spherical and/or made of a plastics material with a suitable hardness.

9. Bearing arrangement according to claim 8, wherein a substantially circular recess (212a) of inwardly increasing depth is provided on the ball portion (212) to receive the spherical damping element (240) in a complementary manner.

10. Bearing arrangement according to any of claims 7 to 9, wherein the damping element (240) is supported on the ball socket (222) by a resilient element (242), for example a spring (242), preloaded in the direction of the ball element (212) and is also preferably rigidly connected to the resilient element (242).

11. Vehicle with a tipping semitrailer, comprising at least one bearing arrangement according to any of the preceding claims.

12. Vehicle according to claim 11, comprising a pair of bearing arrangements according to claim 4 in a front region of the vehicle and a pair of bearing arrangements according to any of claims 5 to 10 in a rear region of the vehicle, the two pairs of bearing arrangements being symmetrically opposite with respect to the longitudinal axis of the vehicle and together supporting the tipping semitrailer in such a way that it can be tipped to three sides.

## Revendications

1. Dispositif palier pour un véhicule avec une semi-remorque à bennes basculantes, comprenant :
- une première partie de palier (110, 210) qui peut être associée à un cadre (R) du véhicule ;
- une seconde partie de palier (120, 220) qui peut être associée à la semi-remorque à benne basculante (K) ;
dans lequel la première (110, 210) et la seconde (120, 220) partie de palier sont prévues afin de permettre, dans un état relié l'une à l'autre, un mouvement de pivotement de la semi-remorque à bennes basculantes (K) par rapport au cadre (R) du véhicule autour d'au moins un axe de pivotement (A, B, C) intérieur ;
- une tige de verrouillage (130) détachable qui coagit dans une position de verrouillage avec la première (110, 210) et la seconde (120, 220) partie de palier de telle manière que l'état relié de la première (110, 210) et la seconde (120, 220) partie de palier soit fixé, dans lequel
la tige de verrouillage (130) comporte un élément d'actionnement (132, 136) qui permet dans l'état actionné par un utilisateur un détachement de la tige de verrouillage (130) de la position de verrouillage et ainsi une libération de l'état relié, dans lequel un élément de blocage (118, 228) est de plus associé à la première (110, 210) ou la seconde (120, 220) partie de palier, dans lequel la tige de verrouillage (130) peut être transférée dans la position de verrouillage en conservant le verrouillage dans une orientation de blocage ou peut être transférée depuis l'orientation de blocage, dans laquelle l'élément de blocage (118, 228) et l'élément d'actionnement (132, 136) coagissent de telle manière qu'un actionnement de l'élément d'actionnement (132, 136) soit empêché,
**caractérisé en ce que**
l'élément d'actionnement (132, 136) de la tige de verrouillage (130) comporte une section de préhension (132) pivotante autour d'un axe (134), qui est à pivoter dans l'état actionné, de préférence contre l'action d'un élément de rappel, par exemple un ressort.

2. Dispositif palier selon la revendication 1, dans lequel la section de préhension (132) est fournie de manière à résister au pivotement avec une section de cliquet (136).

3. Dispositif palier selon la revendication 2, dans lequel l'élément de blocage (118, 218) est formé par une section d'appui (118, 228) contre la première (110) ou la seconde (220) partie de palier qui est conçue afin de coagir dans une position angulaire prédéterminée de la tige de verrouillage (130) dans la position de verrouillage avec la section de cliquet (136) de la tige de verrouillage (130) de telle manière que le pivotement de la section de préhension (132) soit empêché.

4. Dispositif palier selon l'une quelconque des revendications précédentes, dans lequel un axe de pivotement (A) intérieur individuel est prévu, lequel est orienté de préférence sensiblement perpendiculairement à la tige de verrouillage (130) dans sa position de verrouillage.

5. Dispositif palier selon l'une quelconque des revendications précédentes, dans lequel deux axes de pivotement (B, C) intérieurs sont prévus, en ce que la première partie de palier (210) comporte une section sphérique (212) et la seconde partie de palier (220) comporte un coussinet sphérique (222), dans lequel de préférence, un des axes de pivotement (B) intérieurs est orienté sensiblement perpendiculairement à la tige de verrouillage (130) dans sa position de verrouillage et/ou l'autre des axes de pivotement (C) intérieurs est orienté sensiblement parallèlement à la tige de verrouillage (130) dans sa position de verrouillage.

6. Dispositif palier selon la revendication 5, dans lequel la section sphérique (212) comporte une interruption (214) avec une étendue longitudinale le long de sa surface de sorte que la tige de verrouillage (130) soit reçue dans sa position de verrouillage en conservant la capacité de pivotement autour des deux axes de pivotement (B, C) intérieurs par l'interruption (214).

7. Dispositif palier selon la revendication 5, dans lequel la section sphérique (212) de la première partie de palier (210) comporte une interruption (214) avec une étendue longitudinale le long de sa surface de sorte que la tige de verrouillage (130) soit reçue dans sa position de verrouillage en conservant la capacité de pivotement autour des deux axes de pivotement (B, C) intérieurs par l'interruption (214), et
un élément d'amortissement (240) est associé au coussinet sphérique (222) de la seconde partie de palier (220) de telle manière qu'il reste toujours en contact, pour un mouvement de pivotement respectif autour des deux des axes (B, C) intérieurs, avec la section sphérique (212) de la première partie de palier (210).

8. Dispositif palier selon la revendication 7, dans lequel l'élément d'amortissement (240) est réalisé en forme de sphère et/ou en une matière plastique avec une dureté appropriée.

9. Dispositif palier selon la revendication 8, dans lequel un évidement (212a) sensiblement circulaire avec une profondeur croissante vers l'intérieur est prévu au niveau de la section sphérique (212) afin de recevoir de manière complémentaire l'élément d'amortissement (240) sphérique.

10. Dispositif palier selon l'une quelconque des revendications 7 à 9, dans lequel l'élément d'amortissement (240) est en appui par un élément élastique (242) par exemple un ressort (242), préchargé en direction de l'élément sphérique (212) contre le coussinet sphérique (222) et est de plus relié de préférence fixement à l'élément élastique (242).

11. Véhicule avec une semi-remorque à bennes basculantes comprenant au moins un dispositif palier selon l'une quelconque des revendications précédentes.

12. Véhicule selon la revendication 11, comprenant une paire de dispositifs palier selon la revendication 4 dans une zone avant du véhicule ainsi qu'une paire de dispositifs palier selon l'une quelconque des revendications 5 à 10 dans une zone arrière du véhicule, dans lequel les deux paires de dispositifs palier se font face par rapport à l'axe longitudinal du véhicule respectivement symétriquement et portent dans l'ensemble la semi-remorque à bennes basculantes de telle manière que celle-ci soit basculable vers les trois côtés.
